# EUROPEAN PATENT APPLICATION

(11) **EP 4 250 796 A1**
(43) Date of publication of application: **27.09.2023**
(21) Application number: 23160926.4
(22) Date of filing: 09.03.2023
(51) Int. Cl.: H04W 24/00, H04W 88/06

(54) **USER EQUIPMENT WITH NON-NETWORK-DECIDED ACCESS TRAFFIC STEERING, SWITCHING AND SPLITTING POLICY DETERMINATION AND ASSOCIATED WIRELESS COMMUNICATION METHOD**

(30) Priority: 21.03.2022 US 202263321869 P; 01.02.2023 US 202318104765
(71) Applicant: MediaTek Inc., Hsin-Chu 300 (TW)
(72) Inventor: CHEN, Chi-Hsien, Hsinchu City 30078 (TW)
(74) Representative: Hoefer & Partner Patentanwälte mbB

(57) **Abstract**

A user equipment, UE, includes an access performance acquisition circuit (101) and a wireless communication circuit (104). The access performance acquisition circuit (101) acquires performance of a 3rd generation partnership project, 3GPP, access and performance of a non-3GPP access. The wireless communication circuit (104) determines a non-network-decided access traffic steering, switching and splitting, ATSSS, policy according to the performance of the 3GPP access and the performance of the non-3GPP access.

## Description

### Cross Reference to Related Applications

This application claims the benefit of U.S. Provisional Application No. 63/321,869, filed on March 21st, 2022. The content of the application is incorporated herein by reference.

### Background

The present invention relates to wireless communications, and more particularly, to a user equipment (UE) with non-network-decided access traffic steering, switching and splitting (ATSSS) policy determination and an associated wireless communication method.

Access traffic steering, switching and splitting (ATSSS) is standardized for enabling traffic steering across multiple accesses, including a 3^{rd} generation partnership project (3GPP) access (e.g., fifth generation (5G) cellular network) and a non-3GPP access (e.g., WiFi network). Specifically, an ATSSS capable UE can use the ATSSS functionality to steer, switch and split the traffic across the 3GPP access and the non-3GPP access. Steering on the 3GPP access and the non-3GPP access can select one of the 3GPP access and the non-3GPP access for best access network selection. Switching on the 3GPP access and the non-3GPP access can switch the 3GPP access to/from the non-3GPP access network for seamless handover. The splitting on the 3GPP access and the non-3GPP access can select both of the 3GPP access and the non-3GPP access for access network aggregation.

The ATSSS capable UE can perform access performance measurements to decide how to distribute traffic over 3GPP access and non-3GPP access. In addition, the performance measurement function (PMF) needs to report measurement result (availability and round-trip time) to the network, and then the network may make decision to change the steering mode via ATSSS rules. In accordance with the current ATSSS specification, there is no way for UE to propose suggested ATSSS rules to network (e.g., 5G core network), even if UE has idea to select best ATSSS policy for better user-end experience, and there is no way for UE to change ATSSS rules by its own, even if UE has idea to select best ATSSS policy for better user-end experience. Consequently, user-end experience at the UE cannot be optimized from UE's point of view since the ATSSS rules are always controlled from network's point of view.

### Summary

One of the objectives of the claimed invention is to provide a user equipment (UE) with non-network-decided access traffic steering, switching and splitting (ATSSS) policy determination and an associated wireless communication method. A user equipment and a wireless communication method according to the invention are defined in the independent claims. The dependent claims define preferred embodiments thereof.

According to a first aspect of the present invention, an exemplary user equipment (UE) is disclosed. The exemplary UE includes an access performance acquisition circuit and a wireless communication circuit. The access performance acquisition circuit is arranged to acquire performance of a 3rd generation partnership project (3GPP) access and performance of a non-3GPP access. The wireless communication circuit is arranged to determine a non-network-decided access traffic steering, switching and splitting (ATSSS) policy according to the performance of the 3GPP access and the performance of the non-3GPP access.

According to a second aspect of the present invention, an exemplary wireless communication method applicable to a user equipment is disclosed. The exemplary wireless communication method includes: performing access performance acquisition for acquiring performance of a 3rd generation partnership project (3GPP) access and performance of a non-3GPP access; and determining a non-network-decided access traffic steering, switching and splitting (ATSSS) policy according to the performance of the 3GPP access and the performance of the non-3GPP access.

These and other objectives of the present invention will no doubt become obvious to those of ordinary skill in the art after reading the following detailed description of the preferred embodiment that is illustrated in the various figures and drawings.

### Brief Description of the Drawings

FIG. 1 is a diagram illustrating a first design of a user equipment (UE) according to an embodiment of the present invention.
FIG. 2 is a diagram illustrating a second design of a UE according to an embodiment of the present invention.
FIG. 3 is a diagram illustrating a third design of a UE according to an embodiment of the present invention.
FIG. 4 is a diagram illustrating a fourth design of a UE according to an embodiment of the present invention.
FIG. 5 is a first sequence diagram illustrating interactions between a UE and a network according to an embodiment of the present invention.
FIG. 6 is a second sequence diagram illustrating interactions between a UE and a network according to an embodiment of the present invention.
FIG. 7 is a third sequence diagram illustrating interactions between a UE and a network according to an embodiment of the present invention.
FIG. 8 is a fourth sequence diagram illustrating interactions between a UE and a network according to an embodiment of the present invention.

### Detailed Description

Certain terms are used throughout the following description and claims, which refer to particular components. As one skilled in the art will appreciate, electronic equipment manufacturers may refer to a component by different names. This document does not intend to distinguish between components that differ in name but not in function. In the following description and in the claims, the terms "include" and "comprise" are used in an open-ended fashion, and thus should be interpreted to mean "include, but not limited to ... ". Also, the term "couple" is intended to mean either an indirect or direct electrical connection. Accordingly, if one device is coupled to another device, that connection may be through a direct electrical connection, or through an indirect electrical connection via other devices and connections.

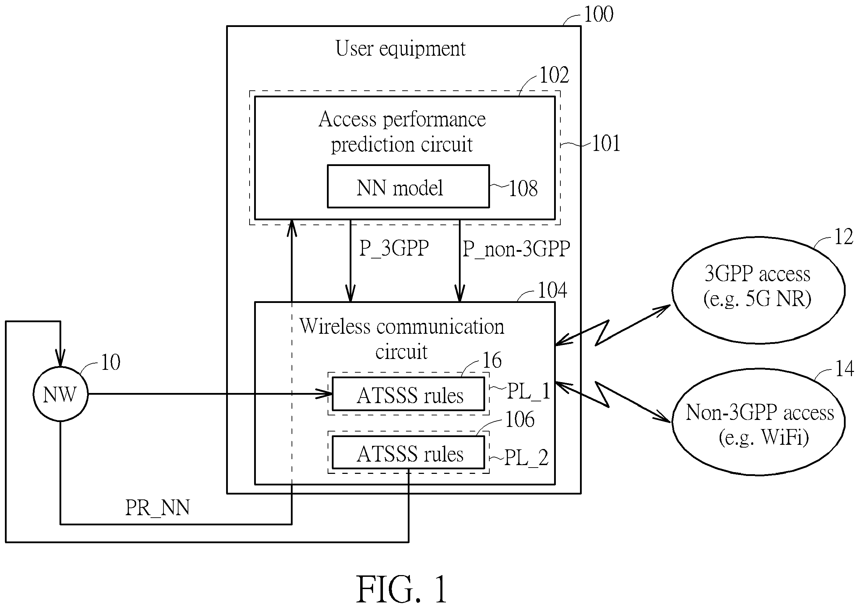

FIG. 1 is a diagram illustrating a first design of a user equipment (UE) according to an embodiment of the present invention. By way of example, but not limitation, the UE 100 may be a 5G system (5GS) ATSSS capable UE. As shown in FIG. 1, the UE 100 includes an access performance acquisition circuit 101 and a wireless communication circuit 104. It should be noted that only the components pertinent to the present invention are shown in FIG. 1. In practice, the UE 100 is allowed to have other components to achieve other designated functions. The access performance acquisition circuit 101 is arranged to acquire performance of a 3rd generation partnership project (3GPP) access (e.g., 5G New Radio) 12 and performance of a non-3GPP access (e.g., WiFi) 14. In this embodiment, the access performance acquisition circuit 101 includes an access performance prediction circuit 102 arranged to perform access performance prediction upon the 3GPP access 12 and the non-3GPP access 14 for predicting performance P_3GPP of the 3GPP access 12 and performance P_non-3GPP of the non-3GPP access 14. The access performance prediction circuit 102 may be implemented by pure hardware, or a processor that loads and executes program codes, or a combination thereof. That is, the UE-side access performance prediction may be achieved through hardware-based means, software-based means, or a combination thereof.

The wireless communication circuit 104 includes components needed to deal with traffic steering across multiple accesses, including the 3GPP access 12 and the non-3GPP access 14. A network (NW) 10 (e.g., 5G core network) may configure a network-decided ATSSS policy PL_1 (which includes ATSSS rules 16 for steering modes such as an Active-Standby mode, a Smallest Delay mode, a Load-balancing mode, and a Priority-based mode) and push it to the UE 100. In addition to receiving the network-decided ATSSS policy PL_1, the wireless communication circuit 104 is further arranged to configure a non-network-decided ATSSS policy PL_2 (which includes ATSSS rules 106 for a new steering mode such as a UE Automatic (Best-Policy) mode) according to the predicted performance P_3GPP of the 3GPP access 12 and the predicted performance P_non-3GPP of the non-3GPP access 14. For example, the wireless communication circuit 104 can decide the best ATSSS policy (i.e., non-network-decided ATSSS policy PL_2) by it owns through changing the network-decided ATSSS policy PL_1 provided and received from the NW 10, or can propose the suggested ATSSS policy (i.e., non-network-decided ATSSS policy PL_2) to the NW 10 for determination of the network-decided ATSSS policy PL_1 at the NW 10.

In one exemplary ATSSS policy handling design that employs the proposed UE-initiated best ATSSS policy determination, if the UE 100 has an idea to select the best ATSSS rules for achieving better user-experience, the UE 100 itself can change one or more ATSSS rules 16 of the network-decided ATSSS policy PL_1 to create ATSSS rules 106 of the non-network-decided ATSSS policy PL_2, and then take action (steer, switch, split) on the basis of the best ATSSS policy (i.e., non-network-decided ATSSS policy PL_2) automatically selected by the UE 100. In addition to the typical steering modes including the Active-Standby mode, the Smallest Delay mode, the load-Balancing mode, and the Priority-based mode, the ATSSS specification may be modified to include a new steering mode such as the UE Automatic (Best-Policy) mode. Hence, the UE 100 (particularly, wireless communication circuit 104 of UE 100) may take action (steer, switch, split) under the UE Automatic (Best-Policy) mode if a condition of the UE 100 fulfills one of the ATSSS rules 106. Optionally, the UE 100 (particularly, wireless communication circuit 104 of UE 100) may further report/notify the selected ATSSS rules 106 of the non-network-decided ATSSS policy PL_2 to the NW 10. Since the UE 100 itself can automatically select the best ATSSS policy according to access performance measurement results, the user-experience of the UE 100 can be optimized from UE's point of view.

In another exemplary ATSSS policy handling design that employs the proposed UE-initiated best ATSSS policy determination, if the UE 100 has an idea to suggest the best ATSSS rules for achieving better user-experience, the UE 100 itself can create ATSSS rules 106 of the non-network-decided ATSSS policy PL_2, and then report the suggested ATSSS policy (i.e., non-network-decided ATSSS policy PL_2) to the NW 10. After being notified of the suggested ATSSS policy (i.e., non-network-decided ATSSS policy PL_2) provided and transmitted from the UE 100, the NW 10 decides whether to accept the suggested ATSSS rules 106, and makes a final decision of ATSSS rules 16 by taking account of UE's suggestion. After the network-decided ATSSS policy PL_1 (which includes ATSSS rules 16 that may be the same or different from the suggested ATSSS rules 106) is configured by the NW 10, the NW 10 transmits the network-decided ATSSS policy PL_1 to the UE 10, and then the UE 100 (particularly, wireless communication circuit 104 of UE 100) may take action (steer, switch, split) under a steering mode (which is one of the Active-Standby mode, the Smallest Delay mode, the Load-Balancing mode, and the Priority-based mode) if a condition of the UE 100 fulfills one of the ATSSS rules 16. Since the UE 100 can provide the NW 10 with the suggested ATSSS policy that is determined according to access performance measurement results, the user-experience of the UE 100 can be optimized from UE's point of view if UE's suggestion is accepted by the NW 10.

In this embodiment, the traffic steering at the UE 100 depends on the predicted performance P_3GGP of the 3GPP access 12 and the predicted performance P_non-3GPP of the non-3GPP access 14. It should be noted that the predicted performance P_3GGP is a prediction result of a future network environment (i.e., a predicted measurement result) of the 3GPP access 12, rather than an instant measurement result of a current network environment of the 3GPP access 12; and the predicted performance P_non-3GGP is a prediction result of a future network environment (i.e., a predicted measurement result) of the non-3GPP access 14, rather than an instant measurement result of a current network environment of the non-3GPP access 14. The network environments of the 3GPP access 12 and the non-3GPP access 14 change rapidly. Since the non-network-decided ATSSS policy PL_2 is determined on the basis of the predicted performance P_3GGP of the 3GPP access 12 and the predicted performance P_non-3GPP of the non-3GPP access 14 (i.e., knowledge of future measurement results of the 3GPP access 12 and the non-3GPP access 14 provided by access performance prediction), the UE 100 (particularly, wireless communication circuit 104 of UE 100) can prepare or suggest the best ATSSS policy in advance, thereby improving the end-user experience greatly. Furthermore, since the traffic steering at the UE 100 is determined on the basis of the predicted performance P_3GGP of the 3GPP access 12 and the predicted performance P_non-3GPP of the non-3GPP access 14 (i.e., knowledge of future measurement results of the 3GPP access 12 and the non-3GPP access 14 provided by access performance prediction), the UE 100 (particularly, wireless communication circuit 104 of UE 100) can take action (steer, switch, split) in advance, thereby improving the end-user experience greatly.

Preferably, the access performance prediction may be achieved through machine learning. That is, the access performance prediction circuit 102 is arranged to obtain the predicted performance P_3GPP of the 3GPP access 12 and the predicted performance P_non-3GPP of the non-3GPP access 14 through machine learning (e.g., neutral-network (NN) based 3GPP and non-3GPP access performance prediction).

Each of the predicted performance P_3GGP of the 3GPP access 12 and the predicted performance P_non-3GPP of the non-3GPP access 14 may include information needed by the UE 100 to decide how to change the network-decided ATSSS policy PL_1 and how to distribute traffic over 3GPP access 12 and non-3GPP access 14. For example, each of the predicted performance P_3GGP of the 3GPP access 12 and the predicted performance P_non-3GPP of the non-3GPP access 14 may include predicted availability (which indicates if an access will be available in a future network environment), predicted round-trip time (RTT) (which indicates the RTT of an access in a future network environment), predicted congestion (which indicates if an access will be congested in a future network environment), etc.

The UE 100 performs NN-based 3GPP and non-3GPP access performance prediction to obtain the predicted performance P_3GPP of the 3GPP access 12 and the predicted performance P_non-3GPP of the non-3GPP access 14 that can be later referenced for determining the best ATSSS policy (i.e., non-network-decided ATSSS policy PL_2) as well as steering the traffic across the 3GPP access 12 and the non-3GPP access 14. The NN model employed by the UE 100 is defined by NN parameters (e.g., weights) . Preferably, the NN parameters PR_NN may be provided by the NW 10 to assist the UE 100 on the NN-based access performance prediction. In this way, better prediction can be achieved by the NN parameters PR_NN communicated between UE 100 and NW 10. Hence, the wireless communication circuit 104 is further arranged to receive NN parameters PR_NN transmitted from the NW 10, and the access performance prediction circuit 102 is further arranged to use an NN model 108 indicated by the NN parameters PR_NN to obtain the predicted performance P_3GPP of the 3GPP access 12 and the predicted performance P_non-3GPP of the non-3GPP access 14.

In the above embodiment shown in FIG. 1, the access performance acquisition circuit 101 is implemented by the access performance prediction circuit 102 for acquiring the performance of the 3GPP access 12 and the performance of the non-3GPP access 14 through access performance prediction (e.g., NN-based 3GPP and non-3GPP access performance prediction). However, this is for illustrative purposes only, and is not meant to be a limitation of the present invention. Alternatively, the access performance prediction may be replaced with access performance measurement. The same objective of enabling a UE to automatically select the best ATSSS policy for steering traffic across 3GPP access and non-3GPP access under a UE Automatic (Best-Policy) mode or enabling a UE to propose the suggested ATSSS policy to a network for better network-decided ATSSS policy selection is achieved.

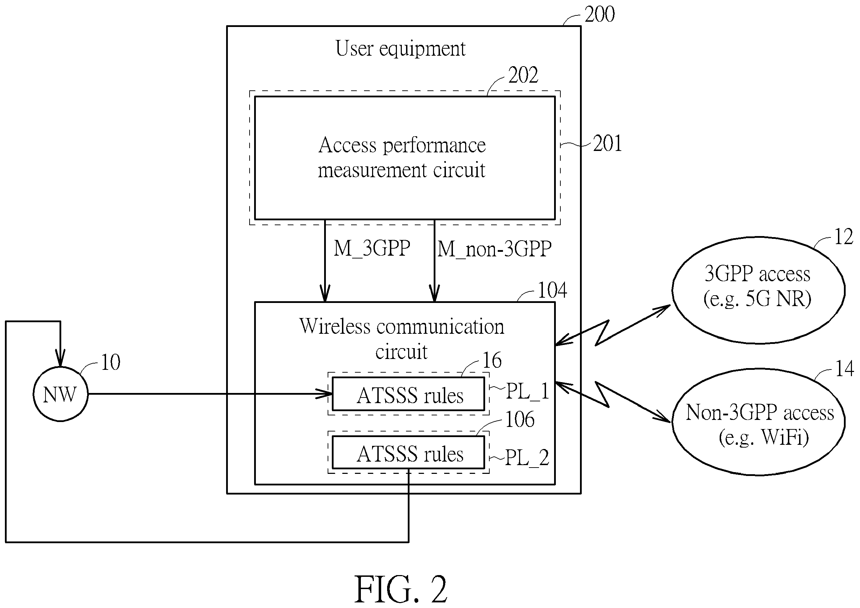

FIG. 2 is a diagram illustrating a second design of a UE according to an embodiment of the present invention. By way of example, but not limitation, the UE 200 may be a 5GS ATSSS capable UE. As shown in FIG. 2, the UE 200 includes an access performance acquisition circuit 201 and the aforementioned wireless communication circuit 104. It should be noted that only the components pertinent to the present invention are shown in FIG. 2. In practice, the UE 200 is allowed to have other components to achieve other designated functions. The major difference between the UE 100 shown in FIG. 1 and the UE 200 shown in FIG. 2 is that the access performance acquisition circuit 201 includes an access performance measurement circuit 202 arranged to perform access performance measurement upon the 3GPP access 12 and the non-3GPP access 14 for measuring performance M_3GPP of the 3GPP access 12 and performance M_non-3GPP of the non-3GPP access 14. The access performance measurement circuit 202 may be implemented by pure hardware, or a processor that loads and executes program codes, or a combination thereof. That is, the UE-side access performance measurement may be achieved through hardware-based means, software-based means, or a combination thereof.

In this embodiment, the wireless communication circuit 104 is arranged to determine the non-network-decided ATSSS policy PL_2 (which includes ATSSS rules 106 for the new steering mode such as the UE Automatic (Best-Policy) mode) according to the measured performance M_3GPP of the 3GPP access 12 and the measured performance M_non-3GPP of the non-3GPP access 14. Compared to the predicted performance P_3GPP which is a predicted measurement result of a further network environment of the 3GPP access 12, the measured performance M_3GPP is an instant measurement result of a current network environment of the 3GPP access 12. Compared to the predicted performance P_non-3GPP which is a predicted measurement result of a further network environment of the non-3GPP access 14, the measured performance M_non-3GPP is an instant measurement result of a current network environment of the non-3GPP access 14.

For example, the wireless communication circuit 104 can decide the best ATSSS policy (i.e., non-network-decided ATSSS policy PL_2) by it owns through changing the network-decided ATSSS policy PL_1 provided and received from the NW 10 according to the measurement results, or can refer to the measurement results to propose the suggested ATSSS policy (i.e., non-network-decided ATSSS policy PL_2) to the NW 10 for determination of the network-decided ATSSS policy PL_1 at the NW 10. Each of the measured performance M_3GGP of the 3GPP access 12 and the measured performance M_non-3GPP of the non-3GPP access 14 may include measured availability (which indicates if an access is available in a current network environment), measured RTT (which indicates the RTT of an access in a current network environment), measured congestion (which indicates if an access is congested in a current network environment), etc.

In one exemplary ATSSS policy handling design that employs the proposed UE-initiated best ATSSS policy determination, if the UE 200 has an idea to select the best ATSSS rules for achieving better user-experience, the UE 200 itself can change one or more ATSSS rules 16 of the network-decided ATSSS policy PL_1 to create ATSSS rules 106 of the non-network-decided ATSSS policy PL_2, and then take action (steer, switch, split) on the basis of the best ATSSS policy (i.e., non-network-decided ATSSS policy PL_2) automatically selected by the UE 100. In addition to the typical steering modes including the Active-Standby mode, the Smallest Delay mode, the Load-Balancing mode, and the Priority-based mode, the ATSSS specification may be modified to include a new steering mode such as a UE Automatic (Best-Policy) mode. Hence, the UE 200 (particularly, wireless communication circuit 104 of UE 200) may take action (steer, switch, split) under the UE Automatic (Best-Policy) mode if a condition of the UE 200 fulfills one of the ATSSS rules 106. Optionally, the UE 200 (particularly, wireless communication circuit 104 of UE 200) may further report/notify the selected ATSSS rules 106 of the non-network-decided ATSSS policy PL_2 to the NW 10. Since the UE 200 itself can automatically select the best ATSSS policy according to access performance measurement results, the user-experience of the UE 200 can be optimized from UE's point of view.

In another exemplary ATSSS policy handling design that employs the proposed UE-initiated best ATSSS policy determination, if the UE 200 has an idea to suggest the best ATSSS rules for achieving better user-experience, the UE 200 itself can create ATSSS rules 106 of the non-network-decided ATSSS policy PL_2, and then report the suggested ATSSS policy (i.e., non-network-decided ATSSS policy PL_2) to the NW 10. After being notified of the suggested ATSSS policy (i.e., non-network-decided ATSSS policy PL_2) provided and transmitted from the UE 200, the NW 10 decides whether to accept the suggested ATSSS policy (i.e., non-network-decided ATSSS policy PL_2), and makes a final decision of ATSSS rules 16 by taking account of UE' s suggestion. After the network-decided ATSSS policy PL_1 (which includes ATSSS rules 16 that may be the same or different from the suggested ATSSS rules 106) is configured by the NW 10, the NW 10 transmits the network-decided ATSSS policy PL_1 to the UE 200, and then the UE 200 (particularly, wireless communication circuit 104 of UE 200) may take action (steer, switch, split) under a steering mode (which is one of the Active-Standby mode, the Smallest Delay mode, the Load-Balancing mode, and the Priority-based mode) if a condition of the UE 200 fulfills one of the ATSSS rules 16. Since the UE 200 can provide the NW 10 with the suggested ATSSS policy that is determined according to access performance measurement results, the user-experience of the UE 200 may be optimized from UE's point of view if UE's suggestion is accepted by the NW 10.

In the above embodiment shown in FIG. 1, the access performance acquisition circuit 101 is implemented by the access performance prediction circuit 102 for acquiring the performance of the 3GPP access 12 and the performance of the non-3GPP access 14 through machine learning. Preferably, machine learning can be used for determining the non-network-decided ATSSS policy that can be automatically selected by the UE for dealing with traffic steering across 3GPP access and non-3GPP access or can be proposed to the network and then considered by the network for making a final decision of the network-decided ATSSS policy.

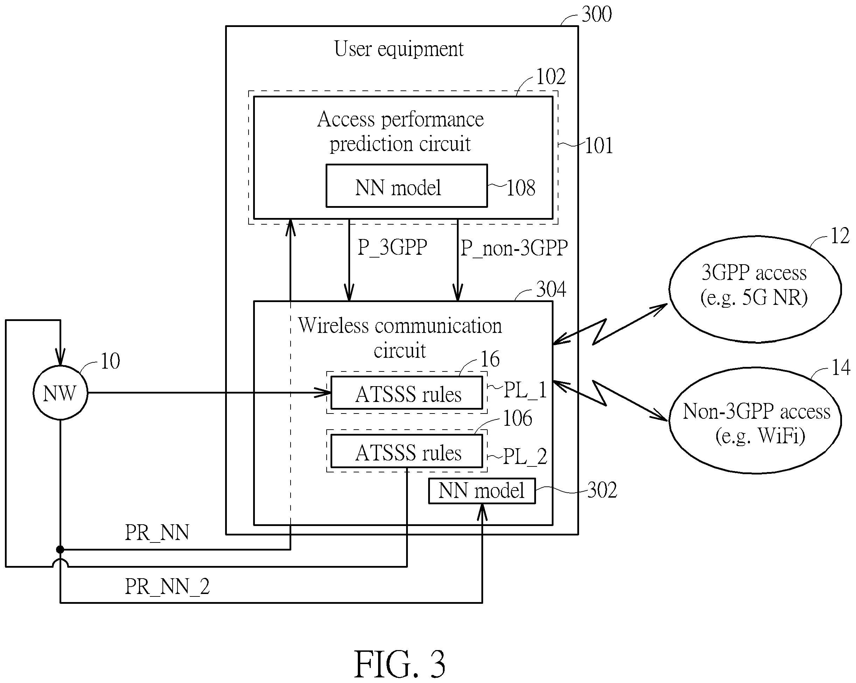

FIG. 3 is a diagram illustrating a third design of a UE according to an embodiment of the present invention. By way of example, but not limitation, the UE 300 may be a 5GS ATSSS capable UE. As shown in FIG. 3, the UE 300 includes a wireless communication circuit 304 and the aforementioned access performance acquisition circuit 101. It should be noted that only the components pertinent to the present invention are shown in FIG. 3. In practice, the UE 300 is allowed to have other components to achieve other designated functions. The major difference between the UE 100 shown in FIG. 1 and the UE 300 shown in FIG. 3 is that the wireless communication circuit 304 is arranged to determine the non-network-decided ATSSS policy PL_2 (which includes ATSSS rules 106 for the new steering mode such as the EU Automatic (Best-Policy) mode) through machine learning.

In this embodiment, the UE 300 performs NN-based 3GPP and non-3GPP access performance prediction to obtain the predicted performance P_3GPP of the 3GPP access 12 and the predicted performance P_non-3GPP of the non-3GPP access 14 that can be later referenced for determining the best ATSSS policy (i.e., non-network-decided ATSSS policy PL_2) as well as steering the traffic across the 3GPP access 12 and the non-3GPP access 14, and further performs NN-based ATSSS policy determination to obtain the non-network-decided ATSSS policy PL_2. Each NN model employed by the UE 300 is defined by NN parameters (e.g., weights) . For example, the NN parameters PR_NN may be provided by the NW 10 to assist the UE 300 on the NN-based access performance prediction, and the NN parameters PR_NN_2 may be provided by the NW 10 to assist the UE 300 on the NN-based ATSSS policy determination. In this way, better performance prediction can be achieved by the NN parameters PR_NN communicated between UE 300 and NW 10, and better ATSSS rule selection can be achieved by the NN parameters PR_NN_2 communicated between UE 300 and NW 10. The wireless communication circuit 304 receives NN parameters PR_NN and PR_NN_2 transmitted from the NW 10, such that the access performance prediction circuit 102 uses the NN model 108 indicated by the NN parameters PR_NN to obtain the predicted performance P_3GPP of the 3GPP access 12 and the predicted performance P_non-3GPP of the non-3GPP access 14, and the wireless communication circuit 304 uses an NN model 308 indicated by the NN parameters PR_NN_2 to determine the non-network-decided ATSSS policy PL_2.

In one exemplary ATSSS policy handling design that employs the proposed UE-initiated best ATSSS policy determination, if the UE 300 has an idea to select the best ATSSS rules for achieving better user-experience, the UE 300 itself can change one or more ATSSS rules 16 of the network-decided ATSSS policy PL_1 to create ATSSS rules 106 of the non-network-decided ATSSS policy PL_2, and then take action (steer, switch, split) on the basis of the best ATSSS policy (i.e., non-network-decided ATSSS policy PL_2) automatically selected by the UE 300. In addition to the typical steering modes including the Active-Standby mode, the Smallest Delay mode, the Load-Balancing mode, and the Priority-based mode, the ATSSS specification may be modified to include the new steering mode such as the UE Automatic (Best-Policy) mode. Hence, the UE 300 (particularly, wireless communication circuit 304 of UE 300) may take action (steer, switch, split) under the UE Automatic (Best-Policy) mode if a condition of the UE 300 fulfills one of the ATSSS rules 106. Optionally, the UE 300 (particularly, wireless communication circuit 304 of UE 300) may further report/notify the selected ATSSS rules 106 of the non-network-decided ATSSS policy PL_2 to the NW 10. Since the UE 300 itself can automatically select the best ATSSS policy according to access performance prediction results, the user-experience of the UE 300 can be optimized from UE's point of view.

In another exemplary ATSSS policy handling design that employs the proposed UE-initiated best ATSSS policy determination, if the UE 300 has an idea to suggest the best ATSSS rules for achieving better user-experience, the UE 300 itself can create ATSSS rules 106 of the non-network-decided ATSSS policy PL_2, and then report the suggested ATSSS policy (i.e., non-network-decided ATSSS policy PL_2) to the NW 10. After being notified of the suggested ATSSS policy (i.e., non-network-decided ATSSS policy PL_2) provided and transmitted from the UE 300, the NW 10 decides whether to accept the suggested ATSSS policy (i.e., non-network-decided ATSSS policy PL_2), and makes a final decision of ATSSS rules 16 by taking account of UE' s suggestion. After the network-decided ATSSS policy PL_1 (which includes ATSSS rules 16 that may be the same or different from the suggested ATSSS rules 106) is determined by the NW 10, the NW 10 transmits the network-decided ATSSS policy PL_1 to the UE 300, and then the UE 300 (particularly, wireless communication circuit 304 of UE 300) may take action (steer, switch, split) under a steering mode (which is one of the Active-Standby mode, the Smallest Delay mode, the Load-Balancing mode, and the Priority-based mode) if a condition of the UE 300 fulfills one of the ATSSS rules 16. Since the UE 300 can provide the NW 10 with the suggested ATSSS policy that is determined according to access performance prediction results, the user-experience of the UE 300 may be optimized from UE's point of view if UE' suggestion is accepted by the NW 10.

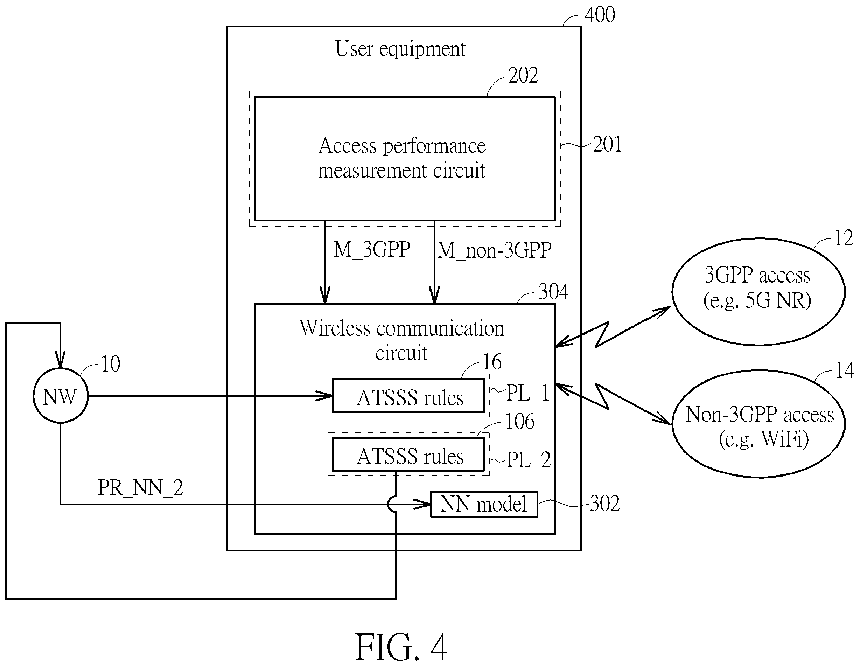

FIG. 4 is a diagram illustrating a fourth design of a UE according to an embodiment of the present invention. By way of example, but not limitation, the UE 400 may be a 5GS ATSSS capable UE. As shown in FIG. 4, the UE 400 includes the aforementioned wireless communication circuit 304 and access performance acquisition circuit 201. It should be noted that only the components pertinent to the present invention are shown in FIG. 4. In practice, the UE 400 is allowed to have other components to achieve other designated functions. The major difference between the UE 300 shown in FIG. 3 and the UE 400 shown in FIG. 4 is that the access performance acquisition circuit 201 includes the access performance measurement circuit 202 arranged to perform access performance measurement upon the 3GPP access 12 and the non-3GPP access 14 for measuring performance M_3GPP of the 3GPP access 12 and performance M_non-3GPP of the non-3GPP access 14. Hence, the UE 400 performs 3GPP and non-3GPP access performance measurement to obtain the measured performance P_3GPP of the 3GPP access 12 and the measured performance P_non-3GPP of the non-3GPP access 14 that can be later referenced for determining the best ATSSS policy (i.e., non-network-decided ATSSS policy PL_2) as well as steering the traffic across the 3GPP access 12 and the non-3GPP access 14, and performs NN-based ATSSS policy determination to obtain the non-network-decided ATSSS policy PL_2.

In one exemplary ATSSS policy handling design that employs the proposed UE-initiated best ATSSS policy determination, if the UE 400 has an idea to select the best ATSSS rules for achieving better user-experience, the UE 400 itself can change one or more ATSSS rules 16 of the network-decided ATSSS policy PL_1 to create ATSSS rules 106 of the non-network-decided ATSSS policy PL_2, and then take action (steer, switch, split) on the basis of the best ATSSS policy (i.e., non-network-decided ATSSS policy PL_2) automatically selected by the UE 400. In addition to the typical steering modes including the Active-Standby mode, the Smallest Delay mode, the Load-Balancing mode, and the Priority-based mode, the ATSSS specification may be modified to include the new steering mode such as the UE Automatic (Best-Policy) mode. Hence, the UE 400 (particularly, wireless communication circuit 304 of UE 400) may take action (steer, switch, split) under the UE Automatic (Best-Policy) mode if a condition of the UE 400 fulfills one of the ATSSS rules 106. Optionally, the UE 400 (particularly, wireless communication circuit 304 of UE 400) may further report/notify the selected ATSSS rules 106 of the non-network-decided ATSSS policy PL_2 to the NW 10. Since the UE 400 itself can automatically select the best ATSSS policy according to access performance measurement results, the user-experience of the UE 400 can be optimized from UE's point of view.

In another exemplary ATSSS policy handling design that employs the proposed UE-initiated best ATSSS policy determination, if the UE 400 has an idea to suggest the best ATSSS rules for achieving better user-experience, the UE 400 itself can create ATSSS rules 106 of the non-network-decided ATSSS policy PL_2, and then report the suggested ATSSS policy (i.e., non-network-decided ATSSS policy PL_2) to the NW 10. After being notified of the suggested ATSSS policy (i.e., non-network-decided ATSSS policy PL_2) provided and transmitted from the UE 400, the NW 10 decides whether to accept the suggested ATSSS policy (i.e., non-network-decided ATSSS policy PL_2), and makes a final decision of ATSSS rules 16 by taking account of UE' s suggestion. After the network-decided ATSSS policy PL_1 (which includes ATSSS rules 16 that may be the same or different from the suggested ATSSS rules 106) is determined by the NW 10, the NW 10 transmits the network-decided ATSSS policy PL_1 to the UE 400, and then the UE 400 (particularly, wireless communication circuit 304 of UE 400) may take action (steer, switch, split) under a steering mode (which is one of an Active-Standby mode, a Smallest Delay mode, a load-Balancing mode, and a Priority-based mode) if a condition of the UE 400 fulfills one of the ATSSS rules 16. Since the UE 400 can provide the NW 10 with the suggested ATSSS policy that is determined according to access performance measurement results, the user-experience of the UE 400 may be optimized from UE's point of view if UE's suggestion is accepted by the NW 10.

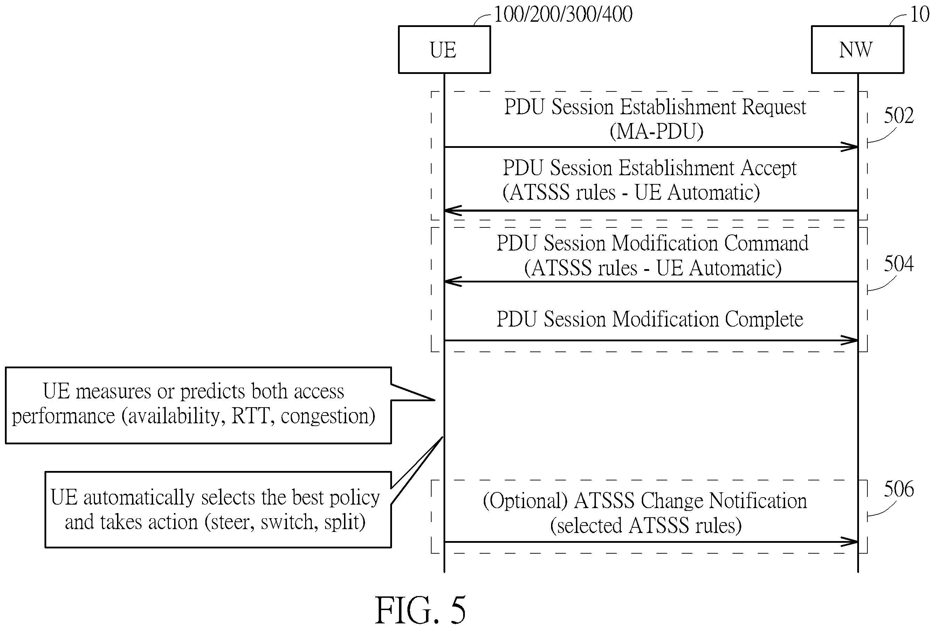

As mentioned above, the UE 100/200/300/400 can operate under a new steering mode (e.g., UE Automatic (Best-Policy) mode) for automatically selecting the best ATSSS policy according to the predicted/measured access performance obtained from observing the network environment. FIG. 5 is a first sequence diagram illustrating interactions between the UE 100/200/300/400 and the NW 10 according to an embodiment of the present invention. The UE 100/200/300/400 establishes a multi-access protocol data unit (MA-PDU) session by initializing a PDU session establishment procedure 502 with the NW 10 over the 3GPP access 12. For example, the UE 100/200/300/400 sends a PDU Session Establishment Request message to the NW 10, with a "MA-PDU Request" indication indicating to the NW 10 that this PDU Session Establishment Request message is to establish an MA-PDU session and to apply the ATSSS function for steering the traffic of this MA-PDU session. The UE 100/200/300/400 receives a PDU Session Establishment Accept message from the NW 10. The PDU Session Establishment Accept message indicates to the UE 100/200/300/400 that the requested MA-PDU session was successfully established, and it includes the ATSSS rules for the MA-PDU session. The ATSSS rules may be a set of one or more ATSSS rules, each having a precedence value (which identifies the precedence of the ATSSS rule), a traffic descriptor, and an access selection descriptor (which includes a steering functionality, a steering mode, and steering mode information). In this embodiment, the PDU Session Establishment Accept message carries the network-decided ATSSS policy, including ATSSS rules for the new steering mode (e.g., UE Automatic (Best-Policy) mode).

The NW 10 may initiate a PDU session modification procedure 504 by sending a PDU Session Modification Command message to the UE 100/200/300/400. The ATSSS rules provided by the NW 10 are carried in the PDU Session Modification Command message. In this embodiment, the PDU Session Modification Command message carries the network-decided ATSSS policy, including ATSSS rules for the new steering mode (e.g., UE Automatic (Best-Policy) mode). The UE 100/200/300/400 acknowledges the PDU Session Modification Command message, and sends a PDU Session Modification Complete message to the NW 10.

To put it simply, the UE 100/200/300/400 can receive ATSSS rules from the NW 10 during the UE-requested PDU session establishment procedure 502 for an MA-PDU session or the NW-requested PDU session modification procedure 504. When the steering mode of ATSSS is the new steering mode (e.g., UE Automatic (Best-Policy) mode), the UE 100/200/300/400 can change the network-decided ATSSS rules by its own for creating best ATSSS rules that can achieve better user-experience, and then automatically select the best ATSSS rules to steer, switch or split according to the performance P_3GPP/M_3GPP of the 3GPP access 12 and performance P_non-3GPP/M_non-3GPP of non-3GPP access 14. Specifically, if a condition of the UE 100/200/300/400 that is evaluated based on the access performance prediction results (P_3GPP and P_non-3GPP) or the access performance measurement results (M_3GPP and M_non-3GPP) fulfills one of ATSSS rules 106 of the non-network-decided ATSSS policy PL_2, the UE 100/200/300/400 can take action (steer, switch, split) for better user-experience.

As mentioned above, the UE 100/200/300/400 can automatically select the best ATSS rules under the new steering mode (e.g., UE Automatic (Best-Policy) mode), where the best ATSS rules locally decided by the UE 100/200/300/400 may be obtained by changing the network-decided ATSS rules carried in a 5GS session management (5GSM) message such as a PDU Session Established Accept message or a PDU Session Modification Command message. In some embodiments, the wireless communication circuit 104/304 of UE 100/200/300/400 may take further action (e.g., report) in response to selection of the best ATSS rules. For example, the UE 100/200/300/400 may initiate a PDU session procedure 506 for reporting the non-network-decided ATSSS policy PL_2 (which includes ATSSS rules 106) to the NW 10 via an ATSSS Change Notification message.

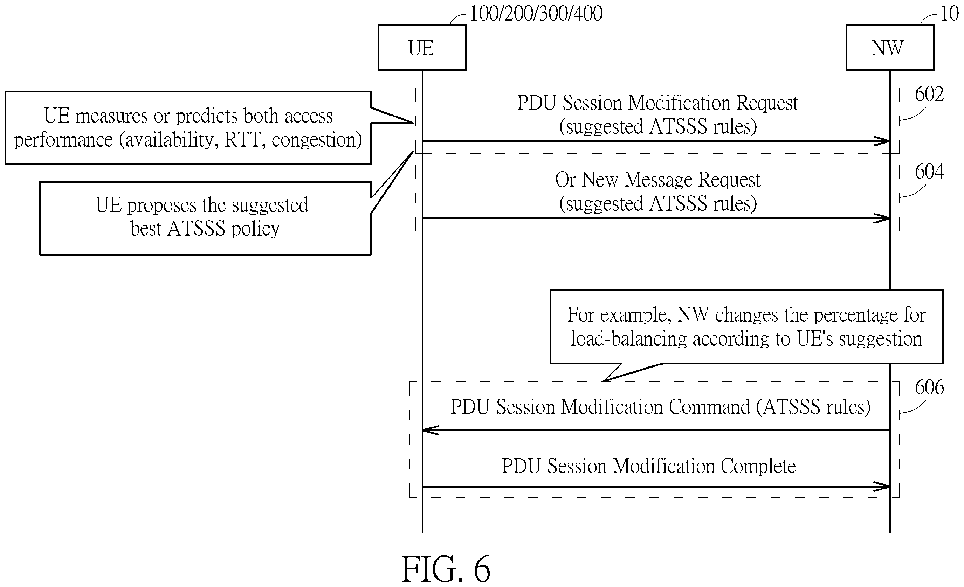

As mentioned above, the UE 100/200/300/400 can propose suggested ATSSS rules to the NW 10, such that the NW 10 can make a final decision of ATSSS rules taking account of UE's suggestion. FIG. 6 is a second sequence diagram illustrating interactions between the UE 100/200/300/400 and the NW 10 according to an embodiment of the present invention. The UE 100/200/300/400 may initiate a PDU session modification procedure 602 by sending a PDU Session Modification request to the NW 10. The ATSSS rules 106 of the non-network-decided ATSSS policy PL_2 that are suggested by the UE 100/200/300/400 are carried in the PDU Session Modification Request message. Alternatively, the UE 100/200/300/400 may initiate a new PDU session procedure 604 for sending the suggested ATSSS rules (e.g., ATSSS rules 106 of the non-network-decided ATSSS policy PL_2) to the NW 10 via a new Message Request.

After being informed of the UE-suggested ATSSS rules, the NW 10 decides whether to accept the UE-suggested ATSSS rules, and then makes a final decision of the network-decided ATSSS policy PL_1 (which includes ATSSS rules 16). For example, the NW 10 changes the percentage for load-balancing according to UE's suggestion. The NW 10 may initiate a PDU session modification procedure 606 by sending a PDU Session Modification Command message to the UE 100/200/300/400. The ATSSS rules provided by the NW 10 are carried in the PDU Session Modification Command message. Specifically, the PDU Session Modification Command message carries the network-decided ATSSS policy, including ATSSS rules for steering modes such as the Active-Standby mode, the Smallest Delay mode, the Load-Balancing mode, and the Priority-based mode. The UE 100/200/300/400 acknowledges the PDU Session Modification Command message, and sends a PDU Session Modification Complete message to the NW 10.

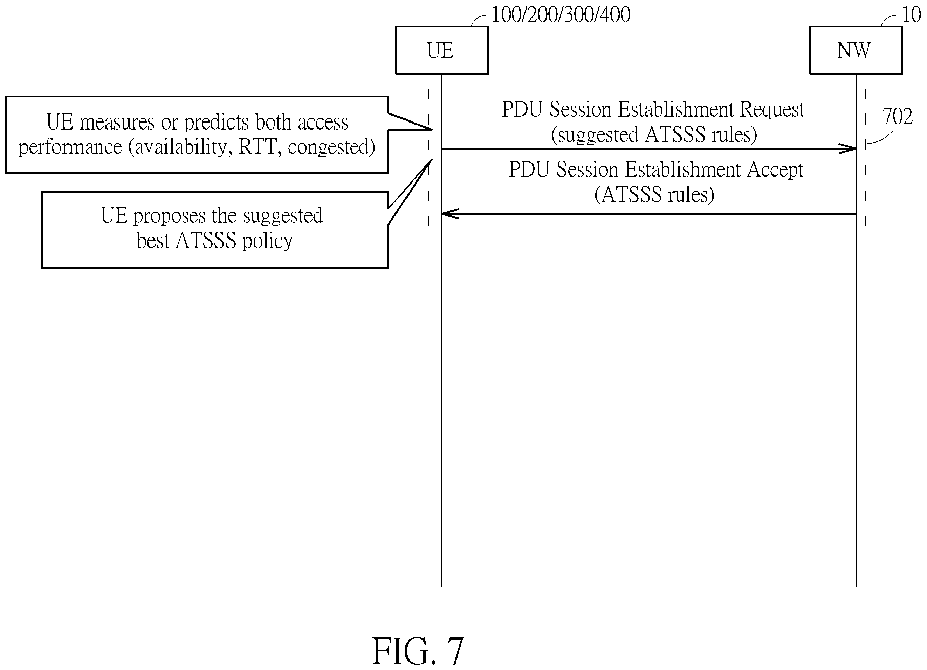

FIG. 7 is a third sequence diagram illustrating interactions between the UE 100/200/300/400 and the NW 10 according to an embodiment of the present invention. The UE 100/200/300/400 establishes an MA-PDU session by initializing a PDU session establishment procedure 702 with the NW 10 over the 3GPP access 12. For example, the UE 100/200/300/400 sends a PDU Session Establishment Request message to the NW 10, with a "MA-PDU Request" indication indicating to the NW 10 that this PDU Session Establishment Request message is to establish an MA-PDU session and to apply the ATSSS function for steering the traffic of this MA-PDU session. In addition, the PDU Session Establishment Request message may be modified to carry the UE-suggested ATSSS rules (e.g., ATSSS rules 106 of the non-network-decided ATSSS policy PL_2) to the NW 10.

After being informed of the UE-suggested ATSSS rules, the NW 10 decides whether to accept the UE-suggested ATSSS rules, and then makes a final decision of the network-decided ATSSS policy PL_1 (which includes ATSSS rules 16). For example, the NW 10 changes the percentage for load-balancing according to UE's suggestion. The UE 100/200/300/400 receives a PDU Session Establishment Accept message from the NW 10. The PDU Session Establishment Accept message indicates to the UE 100/200/300/400 that the requested MA-PDU session was successfully established, and it also includes the ATSSS rules for the MA-PDU session. Specifically, the PDU Session Establishment Accept message carries the network-decided ATSSS policy PL_1, including ATSSS rules 16 for steering modes such as the Active-Standby mode, the Smallest Delay mode, the Load-Balancing mode, and the Priority-based mode.

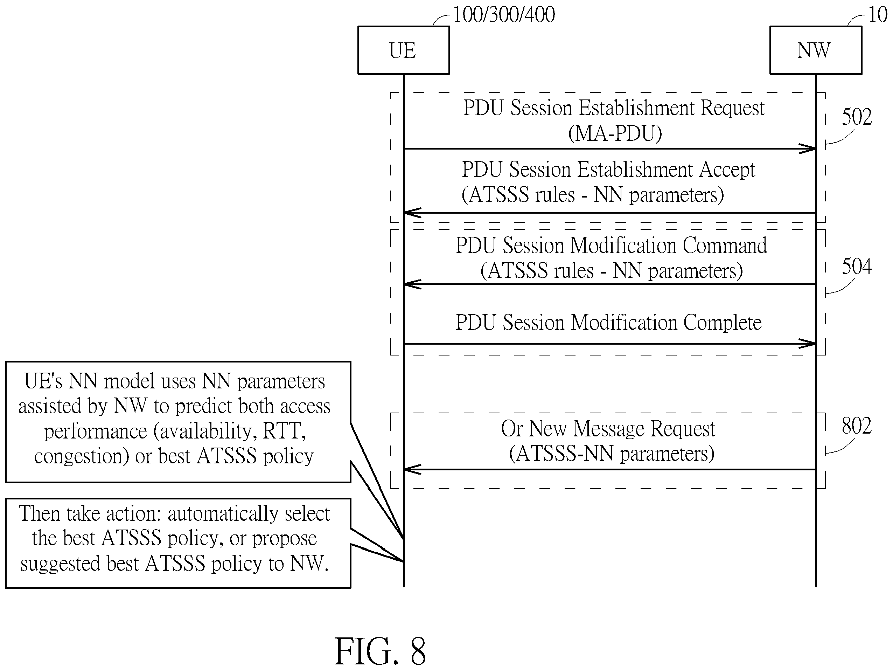

As mentioned above, the UE 100/300 performs NN-based 3GPP and non-3GPP access performance prediction to obtain the predicted performance P_3GPP of the 3GPP access 12 and the predicted performance P_non-3GPP of the non-3GPP access 14, and the UE 300/400 performs NN-based ATSSS policy determination to obtain the non-network-decided ATSSS policy PL_2 (which includes ATSSS rules 106). The NN model employed by the UE is defined by NN parameters (e.g., weights). In some embodiments, the NN parameters PR_NN may be provided by the NW 10 to assist the UE 100/300 on the NN-based access performance prediction, and the NN parameters PR_NN_2 may be provided by the NW 10 to assist the UE 300/400 on the NN-based ATSSS policy determination. FIG. 8 is a fourth sequence diagram illustrating interactions between the UE 100/300/400 and the NW 10 according to an embodiment of the present invention. For example, the PDU session establishment procedure 502 may be modified to have the NN parameters PR_NN/PR_NN_2 carried by a modified PDU Session Establishment Accept message that is sent from the NW 10 to the UE 100/300/400. For another example, the PDU session modification procedure 504 may be modified to have the NN parameters PR_NN/PR_NN_2 carried by a modified PDU Session Modification Command message that is sent from the NW 10 to the UE 100/300/400. For yet another example, a new PDU session procedure 802 may be proposed for sending the NN parameters PR_NN/PR_NN_2 via a new Message Request. The UE 100/300 can use the NN model 108 indicated by the NN parameters PR_NN assisted by the NW 10 to predict performance of the 3GPP access 12 and performance of non-3GPP access 14, and then can automatically select the best ATSSS policy to take action (steer, switch, split) according to the access performance prediction results of the 3GPP access 12 and performance of non-3GPP access 14. The UE 300/400 can use the NN model 302 indicated by the NN parameters PR_NN_2 assisted by the NW 10 to determine the best ATSSS policy according to the access performance prediction results of the 3GPP access 12 and performance of non-3GPP access 14.

Those skilled in the art will readily observe that numerous modifications and alterations of the device and method may be made while retaining the teachings of the invention. Accordingly, the above disclosure should be construed as limited only by the metes and bounds of the appended claims.

## Claims

1. A user equipment, in the following also referred to as UE, comprising:
an access performance acquisition circuit (101; 201), arranged to acquire performance of a 3rd generation partnership project, in the following also referred to as 3GPP, access and performance of a non-3GPP access; and
a wireless communication circuit (104; 304), arranged to determine a non-network-decided access traffic steering, switching and splitting, in the following also referred to as ATSSS, policy according to the performance of the 3GPP access and the performance of the non-3GPP access.

2. The UE of claim 1, wherein the access performance acquisition circuit (201) is arranged to perform access performance measurement upon the 3GPP access and the non-3GPP access for measuring the performance of the 3GPP access and the performance of the non-3GPP access.

3. The UE of claim 1 or 2, wherein the access performance acquisition circuit (101) is arranged to perform access performance prediction upon the 3GPP access and the non-3GPP access for predicting the performance of the 3GPP access and the performance of the non-3GPP access.

4. The UE of claim 3, wherein the access performance acquisition circuit (101) predicts the performance of the 3GPP access and the performance of the non-3GPP access through machine learning.

5. The UE of claim 4, wherein the wireless communication circuit (104; 304) is further arranged to receive neural-network, in the following also referred to as NN, parameters transmitted from a network, and the access performance acquisition circuit (101) uses an NN model indicated by the NN parameters to predict the performance of the 3GPP access and the performance of the non-3GPP access.

6. The UE of any one of claims 3 to 5, wherein each of the performance of the 3GPP access and the performance of the non-3GPP access predicted by the access performance acquisition circuit (101) comprises at least one of predicted availability, predicted round-trip time, in the following also referred to as RTT, and predicted congestion.

7. The UE of any one of claims 1 to 6, wherein the wireless communication circuit (304) is arranged to determine the non-network-decided ATSSS policy through machine learning;
wherein preferably the wireless communication circuit is further arranged to receive NN parameters transmitted from a network, and use an NN model indicated by the NN parameters to determine the non-network-decided ATSSS policy.

8. The UE of any one of claims 1 to 7, wherein the wireless communication circuit (104; 304) is further arranged to automatically select the non-network-decided ATSSS policy to deal with traffic steering across the 3GPP access and the non-3GPP access; and/or
wherein the wireless communication circuit (104; 304) is further arranged to report the non-network-decided ATSSS policy to a network.

9. A wireless communication method applicable to a user equipment, comprising:
performing access performance acquisition for acquiring performance of a 3rd generation partnership project, in the following also referred to as 3GPP, access and performance of a non-3GPP access; and
determining a non-network-decided access traffic steering, switching and splitting, in the following also referred to as ATSSS, policy according to the performance of the 3GPP access and the performance of the non-3GPP access.

10. The wireless communication method of claim 9, wherein performing access performance acquisition for acquiring the performance of the 3GPP access and the performance of the non-3GPP access comprises:
performing access performance measurement upon the 3GPP access and the non-3GPP access for measuring the performance of the 3GPP access and the performance of the non-3GPP access.

11. The wireless communication method of claim 9 or 10, wherein performing access performance acquisition for acquiring the performance of the 3GPP access and the performance of the non-3GPP access comprises:
performing access performance prediction upon the 3GPP access and the non-3GPP access for predicting the performance of the 3GPP access and the performance of the non-3GPP access.

12. The wireless communication method of claim 11, wherein the access performance prediction predicts the performance of the 3GPP access and the performance of the non-3GPP access through machine learning;
and preferably further comprising:
receiving neural-network, in the following also referred to as NN, parameters transmitted from a network,
wherein the access performance prediction uses an NN model indicated by the NN parameters to predict the performance of the 3GPP access and the performance of the non-3GPP access.

13. The wireless communication method of claim 11 or 12, wherein each of the performance of the 3GPP access and the performance of the non-3GPP access predicted by the access performance prediction comprises at least one of predicted availability and predicted round-trip time, in the following also referred to as RTT.

14. The wireless communication method of any one of claims 9 to 13, wherein determining the non-network-decided ATSSS policy according to the performance of the 3GPP access and the performance of the non-3GPP access comprises:
determining the non-network-decided ATSSS policy through machine learning;
and preferably further comprising:
receiving NN parameters transmitted from a network,
wherein an NN model indicated by the NN parameters is used to determine the non-network-decided ATSSS policy.

15. The wireless communication method of any one of claims 9 to 14, further comprising:
automatically selecting the non-network-decided ATSSS policy to deal with traffic steering across the 3GPP access and the non-3GPP access; and/or
reporting the non-network-decided ATSSS policy to a network.
